# EUROPEAN PATENT SPECIFICATION

(11) **EP 1 930 200 B1**
(45) Date of publication and mention of the grant of the patent: **07.10.2009**
(21) Application number: 07270064.4
(22) Date of filing: 01.11.2007
(51) Int. Cl.: B60K 20/02

(54) **Selector arrangement for a vehicle console**
Wählervorrichtung für eine Fahrzeugkonsole
Sélecteur pour une console de véhicule

(30) Priority: 04.12.2006 GB 0624199
(43) Date of publication of application: 11.06.2008
(73) Proprietor: JAGUAR CARS LIMITED, Whitley Coventry CV3 4LF (GB)
(72) Inventor: Whelan, Alister, Warwickshire, CV31 3BU (GB); Gicquel, Olivier Yves, Warwickshire, CV 22 7GY (GB)
(74) Representative: Needle, Jacqueline

(56) References cited:
- EP-A- 1 229 272
- DE-A1-102004 019 893
- DE-A1-102004 054 264
- GB-A- 2 417 300

## Description

The present invention relates to a selector arrangement for a vehicle console. The invention relates more specifically to a selector arrangement having a rotary switch for selecting an operating mode of an automatic or semi-automatic vehicle transmission actuated by shift-by-wire.

It is known for instance from GB 2 417 300 to provide in the outer surface of a centre console a rotary switch which can be grasped by the driver and rotated around a vertical axis so that to select the operating mode of the transmission. The rotary switch is mounted in a housing forming part of the console and is connected to a retractor actuator that enables the rotary switch to be moved between an active position where the rotary switch extend beyond the outer surface of the centre console and an inactive position where the rotary switch is retracted inside the housing and cannot be readily moved by the driver. Hence in the latter position there is no obtrusive component, between the passenger seat and the driver seat, which can impede the movement of the passengers in the front of the passenger space when the vehicle is standstill.

Despite the fact that the switch mechanism above mentioned provides satisfaction it is an object of the present invention to provide an alternative selector arrangement.

According to a first aspect of the invention there is provided a vehicle console comprising a housing having an outer surface which includes an aperture and a selector arrangement for operating at least one functional element of the vehicle, wherein the selector arrangement comprises a rotary switch which includes a knob having an end surface, the knob extending into the aperture in such a way that the end surface of the knob is flush with the outer surface of the console, and a shroud means, surrounding the knob and having an end surface, which in use is controlled by a control unit such that the shroud means is displaced between an advanced position in which the end surface of the shroud means and the end surface of the knob are flush with the outer surface of the console so that the knob is prevented from being grasped by the driver and a retracted position where the shroud means is recessed into the housing in such a way as to enable the knob to be grasped by the driver through the aperture.

The shroud means may include at least one ring connected to a drive mechanism which in use is connected to the control unit for retracting the or each ring to enable the knob to be grasped and rotated or for advancing the or each ring so that access to the knob by the driver is prevented

The drive mechanism may be configured and adapted to displace the or each ring linearly into the housing. Alternatively, the drive mechanism may be configured and adapted to displace the or each ring into the housing in a helicoidal motion.

According to a second aspect of the invention there is provided a method of controlling a selector arrangement of a vehicle console according to the first aspect of the present invention when installed in a motor vehicle and the control unit is in receipt of data relating to the operational state of the vehicle, in which, if the control unit detects a signal to start or to stop the engine, the control unit sends a command to the drive mechanism to move the shroud means towards its advanced position or retracted position depending on the current position of the shroud means.

The invention will now be described by way of example with reference to the accompanying drawings of which: -
Fig.1 is a plan view of a first embodiment of a selector arrangement for a vehicle centre console in accordance with the present invention, including a rotary switch for selecting the operating mode (P,R,N, and D) of an automatic transmission;
Figs.2 and 3 are sectional views of the selector arrangement shown in Fig.1, respectively where the selector is in an inactive position and where the selector is in active position;
Figs.4 and 5 are perspective views of a selector for a second embodiment of the invention; and
Fig 6 is a schematic sectional view of the selector arrangement shown in Fig. 5.

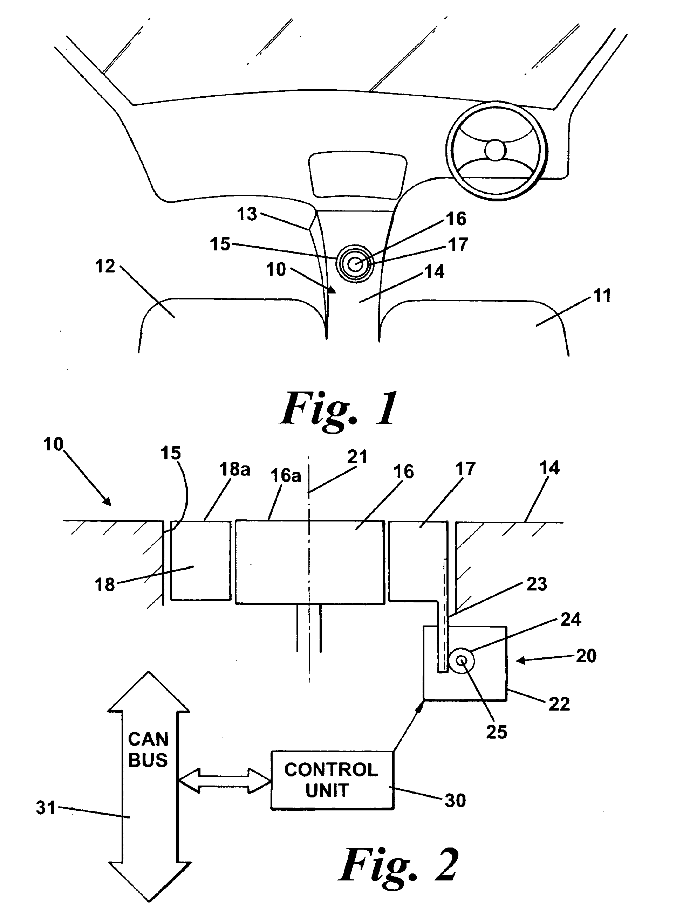

Referring to Figs. 1 to 3, there is shown a motor vehicle centre console 10 mounted, in a conventional way, between a driver's seat 11 and a passenger seat 12. The console 10 comprises side walls 13 and an outer surface 14 forming thus a housing. The outer surface 14 has an aperture 15 to receive a rotary switch and a shroud means 17 surrounding the rotary switch 16. The rotary switch includes a knob 16 having an end surface 16a. The knob extends into the aperture 15 in such a way that the end surface 16a of the knob 16 is flush with the outer surface 14 of the console 10.

The shroud means 17 includes a ring 18 having an end surface 18a. The ring 18 is connected to a drive mechanism 20 for lowering the ring 18 enabling the knob 16 to be grasped by the driver and rotated around a vertical axis 21 so that to select the operating mode of the transmission towards indicia constituting the letters PRND corresponding to Park (P), Reverse (R), Neutral (N) and Drive (D) modes respectively in an automatic transmission or lifting it so that access to the knob 16 is prevented, as described below.

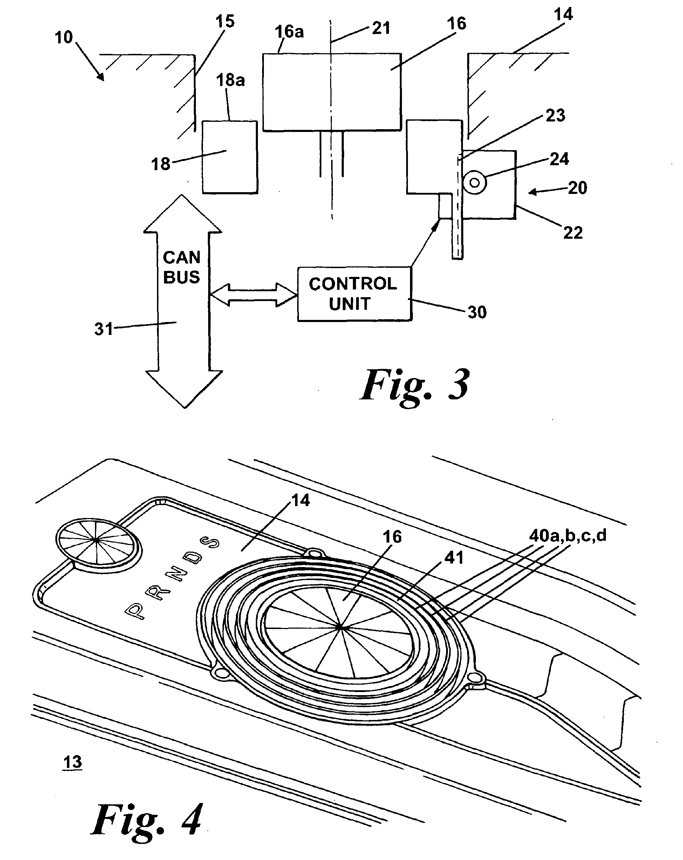

The drive mechanism 20 includes a reversible 12v DC motor 22 and a rack 23 having teeth to mesh with the teeth of a pinion 24 that engages a rotatable shaft 25 of the motor 22. The rack 23 extends as an arm from the ring 18, as can best be seen in Figs.2 and 3. Nonetheless, it is contemplated that many different constructions for providing movement to the ring are possible and are contemplated to be within a scope of the present invention. The DC motor 22 is controlled by a control unit 30 which is also connected to a CAN bus 31 allowing the control unit 30 to communicate with other control units located in the vehicle, e.g. an engine control unit, transmission control unit, an ignition mechanism. In particular, each system makes available on the CAN bus 31 data from the sensors associated with it, data relating to its own operation and data relating to the vehicle's operation which it has derived from the information available to it.

Thus, the rotary switch 16 is initially prevented from being grasped by the driver in a selector arrangement in which the ring 18 is in an upper position in such a way that the end surface 18a of the ring 18, the end surface 16a of the knob 16 and the end surface 14 of the console 10 are flush with (Fig. 2). Upon placing a key in the ignition and turning the key to the ignition "on" position or alternatively, if the vehicle is provided without a key, starting the engine via an engine start button, a command signal is sent over the CAN bus 31 and receiving by the control unit 30 which actuates the motor 22 causing the ring 18 to drop linearly into the housing, where access to the knob 16 is permitted. The driver can then select a required mode by actuating the knob 16 as described for instance in GB 2 417 300.

Similarly when a request to stop the engine is detected, a command signal is sent over the CAN bus 31 and receiving by the control unit 30 which actuates the motor 22 causing the ring 18 to rise vertically within the housing, where the knob 16 cannot be readily moved by the driver.

It will be appreciated that the control unit 30 can be programmed to move the shroud means 17 toward its upper position or advanced position where the knob 16 cannot be readily moved if the transmission has been detected to be in a failure or 'limp home' mode in which only the current gear ratio is available or Neutral.

In an alternative shown in Figs. 4 to 6, the shroud means includes a set of four chrome ring 40a, 40b, 40c and 40d and one aluminium ring 41 also called hereafter driven ring which is located adjacent the knob 16. The lower part of the driven ring 41 includes a hub 42 which is provided with a peripheral helical cam slot 43. The cam slot 43 receives a follower 44 which is fixed relative to hub 42. The hub 42 of the driven ring 41 is connected to a drive mechanism 50 for lowering or lifting the rings 41, 40a-40d, as described below.

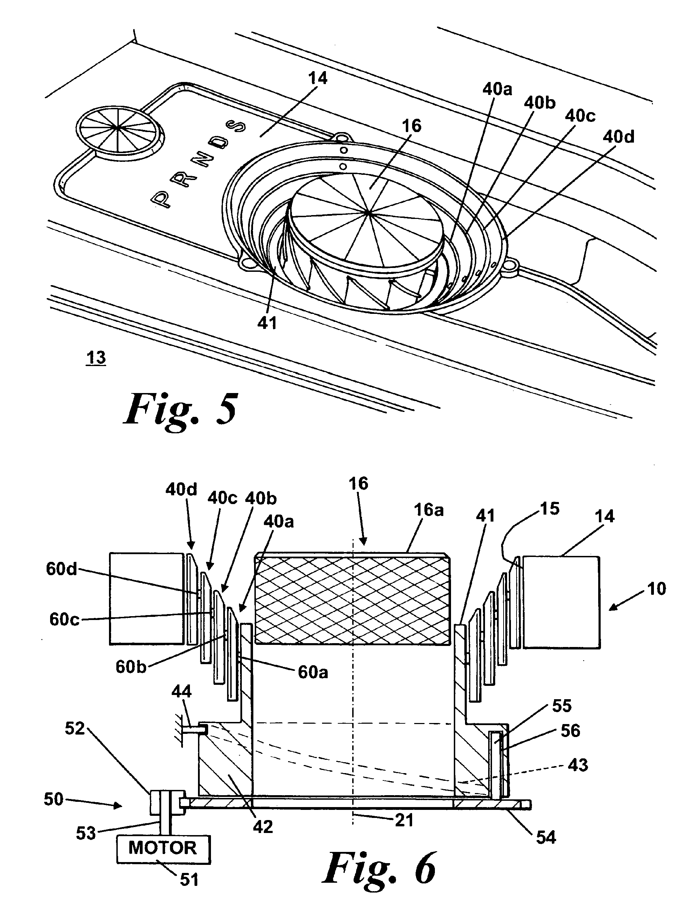

Referring in particular to Fig.6, the drive mechanism 50 includes a reversible 12v DC motor 51, a small pinion 52 that engages a rotatable shaft 53 of a motor 51 and which meshes with a larger pinion 54. The larger pinion 54 is rotatable about the vertical axis 21 of the knob 16 and includes a peg 55 which extends from its surface facing the hub 42 of the driven ring 41. The peg 55 is received in a bore 56 formed in the hub 42 so as to drive in rotation the driven ring 41 when the motor 51 is operated.

Each chrome ring 40a-40d includes a pin 60a-60d which extends laterally from one side of the ring 40 and a cam slot (not shown) arranged on the other side of the ring 40a-40c except for the ring 40d which is fixed to the console 10. Each pin 60a-60d is received into the cam slot of the adjacent chrome ring. The driven ring 41 is also provided on its surface facing the rings 40a-40d with a cam slot (not shown) which receives the pin 60a of the adjacent chrome ring 40a.

Each cam slot is shaped to convert rotational movement into translational displacement. Hence, as already mentioned in the first embodiment, the rotary switch 16 is initially prevented from being grasped by the driver in a selector arrangement in which the rings 41 and 40a-40d are in an advanced position in such a way that the end surface of the rings 41 and 40a-40d, the end surface 16a of the knob 16 and the outer surface 14 of the console 10 are flush with each other. Upon detection of a command to start the engine (i.e. by placing a key in the ignition or pushing an engine start button if the vehicle is equipped with a keyless device), the command signal is sent over the CAN bus and received by the control unit 30 which actuates the motor 51 causing the driven ring 41 to rotate and translate vertically into the console 10 like a screw thread. Part way through the movement of the driven ring 41, the latter pulls down the ring 40a adjacent to it where the corresponding pin 60a of the ring 40a abuts the end stop of the corresponding cam slot. Then the next ring 40b is also pulled down in the same way and so on in sequence where access to the knob 16 is permitted. The driver can then select a required mode by actuating the knob 16 of the rotary switch. It will be appreciated that in this example each chrome ring has a beveled upper edge so that to give more clearance to grasp the knob when the rings 40a- 40c and the driven ring 41 are in their retracted or lower positions.

In a modification, the set of rings 40 and driven ring 41 can be replaced by a unique driven ring which is able to drop down into the console according to a helicoidal motion like a screw thread.

Although the selector as described in the examples herein is a rotary switch for selecting operating mode of an automatic transmission, it will be appreciated that the rotary switch can control other functional elements of the vehicle such as for example a menu for a navigation device. Furthermore the rotary switch could be arranged on a console located in another position that between the driver's seat and passenger seat, for instance on a console which forms part of the dashboard.

## Claims

1. A vehicle console (10) comprising a housing having an outer surface (14) which includes an aperture (15) and a selector arrangement for operating at least one functional element of the vehicle, the selector arrangement comprising a rotary switch which includes a knob (16) having an end surface (16a), the knob (16) extending into the aperture (15) in such a way that the end surface (16a) of the knob (16) is flush with the outer surface (14) of the console (10), **characterised in that** there is provided a shroud means (17), surrounding the knob (16) and having an end surface (18a), which in use is controlled by a control unit (30) such that the shroud means (17) is displaced between an advanced position in which the end surface (18a0 of the shroud means (17) and the end surface (16a) of the knob (16) are flush with the outer surface (14) of the console (10) so that the knob (16) is prevented from being grasped by the driver and a retracted position where the shroud means (17) is recessed into the housing in such a way as to enable the knob (16) to be grasped by the driver through the aperture (15).

2. A console as claimed in claim 1, in which the shroud means (17) includes at least one ring (18; 40a-40d) connected to a drive mechanism (20) which in use is connected to the control unit (30) for retracting the or each ring (18; 40a-40d) to enable the knob (16) to be grasped and rotated or for advancing the or each ring (18; 40a-40d) so that access to the knob (16) by the driver is prevented.

3. A console as claimed in claim 2, in which the drive mechanism (20) is configured and adapted to displace the or each ring (18; 40a-40d) linearly into the housing.

4. A console as claimed in claim 2, in which the drive mechanism (20) is configured and adapted to displace the or each ring (18; 40a-40d) into the housing in a helicoidal motion.

5. A console as claimed in claim 3, in which the drive mechanism includes a reversible motor (22) and a rack (23) on or connected to the or one of the rings, the rack having teeth meshing with the teeth of a pinion (24) driven by the motor (22).

6. A console as claimed in claim 4, in which the drive mechanism (20) includes a reversible motor (51) which is connected to a hub (42) attached to the ring or one of the rings (40a-40d), one of the hub and the housing being provided with a helical cam slot (43) which receives a follower (44) on the other of the hub and the housing.

7. A console as claimed in claim 4 or claim 6, in which the shroud means (17) includes a set of rings (40a-40d) which in use are adapted and configured to rotate and translate vertically in sequence into the console when driven by the drive mechanism.

8. A console as claimed in any one of the preceding claims when in use in a motor vehicle having a transmission, wherein the rotary switch (16) is in use rotatable in the housing between a number of selector positions each associated with a respective operating mode of the transmission.

9. A method of controlling a selector arrangement of a vehicle console as claimed in any of claims 1 to 8 when installed in a motor vehicle and the control unit (30) is in receipt of data relating to the operational state of the vehicle, in which, if the control unit detects a signal to start or to stop the engine, the control unit (30) sends a command to the drive mechanism (20) to move the shroud means (17) towards its advanced position or retracted position depending on the current position of the shroud means.

10. A method of controlling a selector arrangement of a vehicle console as claimed in claim 8 when installed in a motor vehicle and the control unit (30) is in receipt of data relating to the operational state of the vehicle, in which, if the control unit (30) receives a failure signal of the transmission, the control unit (30) sends a command to the drive mechanism to move the shroud means (17) towards its advanced position.

## Patentansprüche

1. Fahrzeugkonsole (10), umfassend ein Gehäuse mit einer Außenfläche (14), welche eine Öffnung (15) und eine Wählvorrichtung für den Betrieb zumindest eines funktionellen Elements eines Fahrzeugs einschließt, wobei die Wählvorrichtung einen Drehschalter umfasst, der einen Drehknopf (16) mit einer Endfläche (16a) einschließt, wobei sich der Drehknopf derart in die Öffnung (15) hineinerstreckt, dass die Endfläche (16a) des Drehknopfs (16) mit der Außenfläche (14) der Konsole (10) bündig ist, **dadurch gekennzeichnet, dass** eine Umhüllungsvorrichtung (17) vorgesehen ist, die den Drehknopf (16) umgibt und eine Endfläche (18a) aufweist, die im Betrieb durch eine Steuereinheit (30) derart gesteuert wird, dass eine Verlagerung der Umhüllungsvorrichtung (17) zwischen einer ausgefahrenen Stellung, in der die Endfläche (18a) der Umhüllungsvorrichtung (17) und die Endfläche (16a) des Drehknopfs (16) mit der Außenfläche (14) der Konsole (10) bündig sind, dass der Drehknopf (16) nicht durch den Fahrer ergriffen werden kann, und einer eingefahrenen Stellung erfolgt, in der die Umhüllungsvorrichtung (17) derart in das Gehäuse zurückgesetzt ist, dass ein Zugriff des Fahrers auf den Drehknopf (16) durch die Öffnung (15) ermöglicht wird.

2. Konsole nach Anspruch 1, wobei die Umhüllungsvorrichtung (17) zumindest einen Ring (18; 40a-40d) einschließt, der mit einem Antriebsmechanismus (20) verbunden ist, welcher im Betrieb mit einer Steuereinheit (30) zum Einfahren des bzw. jedes Rings (18; 40a-40d) oder zum Ausfahren des bzw. jedes Rings (18; 40a-40d) so verbunden ist, dass der Drehknopf (16) ergriffen und gedreht werden kann oder dass ein Zugriff des Fahrers auf den Drehknopf (16) verhindert wird.

3. Konsole nach Anspruch 2, wobei der Antriebsmechanismus (20) so ausgestaltet und angepasst ist, dass der bzw. jeder Ring (18; 40a-40d) linear in das Gehäuse verlagert werden kann.

4. Konsole nach Anspruch 2, wobei der Antriebsmechanismus (20) so ausgestaltet und angepasst ist, dass der bzw. jeder Ring (18; 40a-40d) mit einer Schraubbewegung in das Gehäuse verlagert werden kann.

5. Konsole nach Anspruch 3, wobei der Antriebsmechanismus einen umsteuerbaren Motor (22) und ein Lenkgetriebe (23), das sich auf dem Ring bzw. einem der Ringe befindet oder damit verbunden ist, einschließt, wobei sich das Lenkgetriebe im Zahneingriff mit dem Ritzel einer Zahnstange (24) befindet, die von dem Motor (22) angetrieben wird.

6. Konsole nach Anspruch 4, wobei der Antriebsmechanismus (20) einen umsteuerbaren Motor (51) einschließt, der mit einer an dem Ring oder einem der Ringe (40a-40d) angebrachten Nabe (42) verbunden ist, wobei entweder die Nabe oder das Gehäuse mit einem schraubenförmigen Nockenschlitz (43) versehen sind, welcher einen Nockenstößel (44) entweder in der Nabe oder dem Gehäuse aufnimmt.

7. Konsole nach Anspruch 4 oder Anspruch 6, wobei die Umhüllungseinrichtung (17) einen Satz von Ringen (40a-40d) einschließt, welcher im Betrieb so angepasst und ausgestaltet ist, dass er sich sukzessive nach vertikal parallelverschoben in die Konsole eindreht, wenn er von dem Antriebsmechanismus angetrieben wird.

8. Konsole nach einem der vorherigen Ansprüche, wenn diese in einem Kraftfahrzeug mit einem Getriebe im Einsatz ist, wobei der Drehschalter (16) in dem Gehäuse zwischen einer Anzahl von Wählstellungen im Einsatz drehbar ist, die jeweils einer entsprechenden Getriebe-Betriebsart zugeordnet sind.

9. Steuerverfahren für eine Wählvorrichtung eines Fahrzeugs nach einem der Ansprüche 1 bis 8, wenn diese in einem Kraftfahrzeug installiert ist und die Steuereinheit (30) Daten bezüglich des Betriebszustandes des Fahrzeugs empfängt, wobei die Steuereinheit (30) einen Befehl an die Antriebsvorrichtung (20) sendet, wenn die Steuereinheit (20) ein Signal zum Starten oder Abstellen des Motors detektiert, um die Umhüllungseinrichtung (17) in Abhängigkeit von der aktuellen Stellung der Umhüllungseinrichtung in Richtung ihrer ausgefahrenen Stellung bzw. ihrer eingefahrenen Stellung zu bewegen.

10. Steuerverfahren für eine Wählvorrichtung eines Fahrzeugs nach Anspruch 8, wenn diese in einem Kraftfahrzeug installiert ist und die Steuereinheit (30) Daten bezüglich des Betriebszustandes des Fahrzeugs empfängt, wobei die Steuereinheit (30) ein Signal an den Antriebsmechanismus sendet, um die Umhüllungseinrichtung (17) in Richtung ihrer ausgefahrenen Stellung zu bewegen, wenn die Steuereinheit (30) ein Getriebe-Ausfallsignal empfängt.

## Revendications

1. Console de véhicule (10) comprenant un logement comportant une surface extérieure (14) comprenant une ouverture (15) et un dispositif de sélecteur pour utiliser au moins un élément fonctionnel du véhicule, le dispositif de sélecteur comprenant un commutateur rotatif comprenant un bouton (16) comportant une surface d'extrémité (16a), le bouton (16) s'étendant dans l'ouverture (15) de telle sorte que la surface d'extrémité (16a) du bouton (16) soit affleurante avec la surface extérieure (14) de la console (10), **caractérisé en ce qu'**elle comprend un moyen formant enveloppe (17), entourant le bouton (16) et comportant une surface d'extrémité (18a), qui, pendant l'utilisation, est commandé par une unité de commande (30) telle que le moyen formant enveloppe (17) soit déplacé entre une position avancée dans laquelle la surface d'extrémité (18a) du moyen formant enveloppe (17) et la surface d'extrémité (16a) du bouton (16) sont affleurantes avec la surface extérieure (14) de la console (10) de telle sorte que le bouton (16) ne puisse pas être saisi par le conducteur et une position rétractée dans laquelle le moyen formant enveloppe (17) est encastré dans le logement de façon à permettre au bouton (16) d'être saisi par le conducteur à travers l'ouverture (15).

2. Console selon la revendication 1, dans laquelle le moyen formant enveloppe (17) comprend au moins une bague (18 ; 40a à 40d) reliée à un mécanisme d'entraînement(20) qui, pendant l'utilisation,est relié à l'unité de commande (30) pour rétracter la ou chaque bague (18 ; 40a à 40d) pour permettre au bouton (16) d'être saisi et mis en rotation ou pour faire avancer la ou chaque bague (18 ; 40a à 40d) de telle sorte que l'accès au bouton (16) par le conducteur soit empêché.

3. Console selon la revendication 2, dans laquelle le mécanisme d'entraînement (20) est configuré et adapté pour déplacer la ou chaque bague (18 ; 40a à 40d) de manière linéaire dans le logement.

4. Console selon la revendication 2, dans laquelle le mécanisme d'entraînement (20) est configuré et adapté pour déplacer la ou chaque bague (18 ; 40a à 40d) dans le logement selon un mouvement hélicoïdal.

5. Console selon la revendication 3, dans laquelle le mécanisme d'entraînement comprend un moteur réversible (22) et une crémaillère (23) sur ou reliée à la ou l'une des bagues, la crémaillère comportant des dents s'engrenant avec les dents d'un pignon (24) entraîné par le moteur (22).

6. Console selon la revendication 4, dans laquelle le mécanisme d'entraînement (20) comprend un moteur réversible (51) relié à un moyeu (42) fixé à la bague ou l'une des bagues (40a à 40d), l'un du moyeu et du logement étant doté d'une fente de came hélicoïdale (43) qui reçoit une roue menée (44) sur l'autre du moyeu et du logement.

7. Console selon la revendication 4 ou 6, dans laquelle le moyen formant enveloppe (17) comprend un ensemble de bagues (40a à 40d) qui, pendant l'utilisation, sont adaptées et configurées pour tourner et se déplacer en translation verticale en séquence dans la console quand elles sont entraînées par le mécanisme d'entraînement.

8. Console selon l'une quelconque des revendications précédentes, quand elle est utilisée dans un véhicule motorisé comportant une transmission, dans laquelle le commutateur rotatif (16) est rotatif pendant l'utilisation dans le logement entre plusieurs positions de sélecteur, chacune associée à un mode de fonctionnement respectif de la transmission.

9. Procédé de commande d'un dispositif de sélecteur d'une console de véhicule selon l'une quelconque des revendications 1 à 8, quand il est installé dans un véhicule motorisé et l'unité de commande (30) reçoit des données liées à l'état opérationnel du véhicule, dans laquelle, si l'unité de commande détecte un signal pour démarrer ou arrêtée le moteur, l'unité de commande (30) envoie une commande au mécanisme d'entraînement (20) pour déplacer le moyen formant enveloppe (17) vers sa position avancée ou sa position rétractée selon la position actuelle du moyen formant enveloppe.

10. Procédé de commande d'un dispositif de sélecteur d'une console de véhicule selon la revendication 8, quand il est installé dans un véhicule motorisé et l'unité de commande (30) reçoit des données liées à l'état opérationnel du véhicule, dans laquelle, si l'unité de commande (30) reçoit un signal de défaillance de la transmission, l'unité de commande (30) envoie une commande au mécanisme d'entraînement pour déplacer le moyen formant enveloppe (17) vers sa position avancée.
